# EUROPEAN PATENT SPECIFICATION

(11) **EP 4 563 310 B1**
(45) Date of publication and mention of the grant of the patent: **13.05.2026**
(21) Application number: 23213561.6
(22) Date of filing: 30.11.2023
(51) Int. Cl.: B27G 1/00, B27L 5/00

(54) **METHOD OF MAKING TEAK PLANK**
VERFAHREN ZUR HERSTELLUNG VON TEAKHOLZPLANKEN
PROCÉDÉ DE FABRICATION DE PLANCHES EN TECK

(43) Date of publication of application: 04.06.2025
(73) Proprietor: Vayakornvichitr, Supakrit, 13290 Ayutthaya (TH)
(72) Inventor: Vayakornvichitr, Supakrit, 13290 Ayutthaya (TH)
(74) Representative: Kaya, Erdem

(56) References cited:
- WO-A1-2010/072139
- CN-A- 101 550 759
- JP-A- S5 914 909
- US-A1- 2001 000 876

## Description

### TECHNICAL FIELD

The present invention generally relates to a method of making a teak plank according to the preamble of the independent claim 1.

Such a method is known from the document: WO 2010/072139 A1.

### BACKGROUND

Teakwood is a dense, close-grained hardwood sourced from the *Tectona grandis* tree, native to South and Southeast Asia. Teakwood is originally golden in color and has a smooth grain and texture. Natural antimicrobial and insecticide substances of teakwood cause excellent natural anti-rot and weathering resistance, even if left untreated. This precious wood is suitable in shipbuilding: the nautical sector uses teak to build manufactured teak decks to join on yachts and sailing, thanks to teakwood's superior durability.

Natural teak forests occur only in four countries of the world: India, Lao PDR, Myanmar, and Thailand. Myanmar is the only country supplying teak from natural forests to the international market. Global teak supply from natural and planted teak forests contributes 2 to 2.5 million m³, roughly 2% of the total tropical round wood production. The supply of teak from natural forests is declining at an alarming rate of about 1.3% globally and the planted teak shows an increasing trend from 1.3 to 5.7 million ha between 1995-2010 (Kollert and Cherubini, 2012).

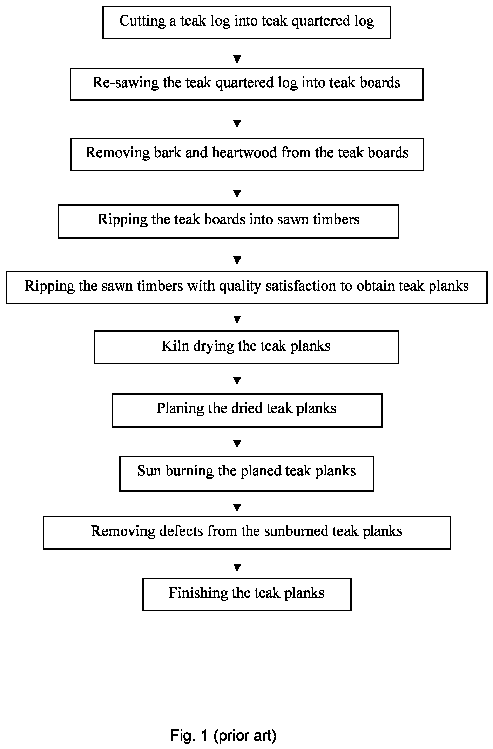

Production of high-quality teakwood in relatively long rotations of 50-70 years has been the traditional practice ever since the first world teak plantation was established in India (Nilambur- Kerala) in the 1840s. Due to the diminishing supply of matured natural teak, new and alternative methods are being explored to rely less on natural teak. The traditional method of producing teak plank using natural teakwood consists of several steps including (i) cutting a teak log into teak quartered log; (ii) re-sawing the teak quartered log into teak boards; (iii) removing bark and heartwood from the teak boards; (iv) ripping the teak boards into sawn timbers; (v) ripping the sawn timbers with quality satisfaction to obtain teak planks in size required for the production of final product; (vi) kiln drying the teak planks; (vii) planing the dried teak planks to remove the irregularities on the outside of the teak planks; (viii) sun burning the planed teak planks to mature their color; (ix) removing defects from the sunburned teak planks; (x) finishing the teak planks by a variety of ways known in the related art to receive the final teak planks with desired characteristics. (See Fig. 1).

US20070292656A1 discloses a composite board comprising a first layer having an orientation and a second layer bonded to the first layer where the second layer comprises a plurality of wooden veneer structures, each wooden veneer structure is substantially perpendicular to the orientation of the first layer. It also discloses a method of making a composite board comprising of providing a first layer having an orientation; assembling a second layer by arranging a plurality of wooden veneer structures so that each wooden veneer structure is substantially perpendicular to the orientation of the first layer; and bonding the first layer to a first surface of the second layer.

CN100344425C discloses a technology for producing floor board with plywood made of medium- or small-diameter includes such steps as spinning cutting to obtain ply, drying, removing excessive edges, milling edge to form bevel edge, longitudinal splicing, abrading, coating resin, laminating, pre-pressing, hot pressing, longitudinal sawing to become strips, planning, lateral splicing, planning, making tenon and slot mortise, painting and polishing.

Due to the dwindling supply of teak from natural forests, teak logs from shorter rotations of 20-30 years appear promising and are being practiced for veneer and saw log production for relatively quick returns. Wood from short-rotation teak plantations generally has a lower price in the timber market because the wood is considered inferior in its quality attributes such as color, density, natural durability, size and defect properties.

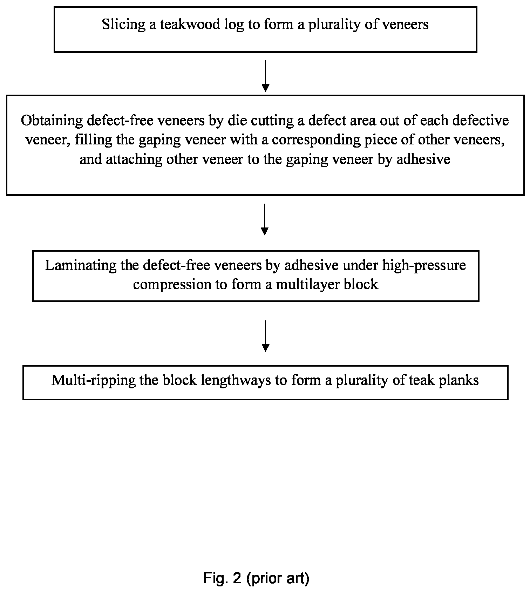

Thai Petty Patent No. 14937 discloses a method for producing teak plank from planted teakwood comprising steps of: (i) slicing a teakwood log to form a plurality of veneers 1-2 mm thick; (ii) obtaining defect-free veneers by die cutting a defect area out of each defective veneer, filling the gaping veneer with a corresponding piece of other veneers and attaching another veneer to the gaping veneer by adhesive; (iii) laminating the defect-free veneers by adhesive under high-pressure compression to form a multilayer block; and (iv) multi-ripping the block lengthways to form a plurality of teak planks (see Fig. 2).

### SUMMARY OF THE INVENTION

It is an object of the invention to obtain teak plank with a straight grain pattern from a method with fewer steps, lowered cost, higher yield, and overall more "green" and sustainable compared with the prior methods of making the teak plank.

One embodiment of the invention well suited for achieving the object is a method of making a teak plank comprising steps of (a) peeling a teakwood log to form a plurality of primary veneers; (b) obtaining defect-free primary veneers by patching a defect area on the primary veneer with a corresponding piece of premium quality secondary veneers; (c) assembling each of the primary veneers in lengthwise and/or widthwise using scarf jointing and gluing two or more of primary veneers together by an adhesive to form a plurality of the assembled veneers; (d) ripping each of the assembled veneers lengthways to form a plurality of strips; (e) laminating the strips by the adhesive under high-pressure compression to form a multilayer block; (f) multi-ripping the multilayer block to form a plurality of teak planks with desired thickness and width; and (g) kiln drying each of teak planks to have the desired moisture. The method of the present invention gives the ability to use younger trees, remove defects more efficiently, and provide larger sizes similar to matured natural teak.

According to the invention, a teak plank is obtained from the aforesaid method of making teak plank with the straight grain pattern and the transverse coefficients of thermal expansion (CTE) less than 50 x 10-6/degree Celsius. The teak plank of the present invention is well suited for decking on luxury vessels e.g. super yachts, making furniture and other decorations due to its durability against UV and saltwater.

The method of the present invention has advantages over the method of the prior arts. One of the main advantages is that the method of the present invention can produce longer lengths of teak plank since the method uses scarf jointing. Length is considered important in teak plank manufacture since natural teakwood is becoming scarce, especially one with a length of 2 meters or longer. This production method allows the manufacturers to use shorter teak logs (below 2 meters long) for easily producing final teak planks longer than 4 meters. The preferable length of teak planks produced by the method of the present invention is 4 meters as it is suitable and practicable for production and transport. Width is also considered important, the lamination allows for wider planks which is considered a scarcity nowadays, for example, to find natural teak with straight grain with 100 millimeters and up width is considered rare. Anything near or above 100 millimeters us considered wide.

Another advantage of the method of the present invention is the faster production of teak planks compared with the methods of the prior arts partly because the method of the present invention uses veneer patching for removing the defects on the veneer instead of a die cut or laser to cut out the defect like the methods of the prior arts. Veneer patching is much more time efficient when compared to the previous methods. Since less precision is required, production at this stage can be twice as fast when comparing to prior arts.

Furthermore, the method of the present invention can reduce waste (higher yield) and be able to use an entire teak log throughout its length. The prior methods rely on the length and width of the teak log.

The method of the present invention also provides teak planks with a more aesthetically pleasing "look". In terms of relativity, the teak plank obtained from the method of the present invention is more similar to natural teakwood since the method can produce a thinner veneer which in turn will make the "lines" made from layers of the strips less visible.

### BRIEF DESCRIPTION OF THE DRAWINGS

Fig. 1 illustrates a flow chart for the traditional method of teak plank manufacture;
Fig. 2 illustrates a flow chart for the method of teak plank manufacture disclosed in the Thai Petty Patent No. 14937;
Fig. 3 illustrates a teakwood log (Fig. 3A) for peeling into a primary veneer, the primary veneer (Fig. 3B) having defects and the primary veneer (Fig. 3C) patched with the corresponding pieces of premium quality secondary veneers;
Fig. 4 illustrates a top view of an assembled veneer by scarf joint (Fig. 4A), top and perspective views of a strip (Figs. 4B and 4C), respectively ripped from the assembled veneer;
Fig. 5 illustrates a perspective view of a multilayer block (Fig. 5A) made from laminating the strips, a front view of the multilayer block (Fig. 5B) showing one strip layer is substantially perpendicular to another strip layer, and a perspective view of the multilayer block (Fig. 5C) with ripping marks (A-A);
Fig. 6 illustrates a perspective view of teak planks obtained from the method of the present invention; and
Fig. 7 illustrates a flow chart for the method of teak plank manufacture according to a specific embodiment of the present invention.

### DETAILED DESCRIPTION

The present invention is best understood by reference to the detailed figures and description set forth herein. Embodiments of the invention are discussed below with reference to the Figures.

The teak plank of the present invention varies in dimension. It is suitable for outdoor and indoor use such as decking on luxury vessels e.g. yachts or making furniture, other application can be interior paneling.

A method of making a teak plank (60) in accordance with one embodiment of the present invention is described in more detail hereafter. The method comprises steps:
a. peeling a teakwood log to form a plurality of primary veneers (20);
b. obtaining a plurality of defect-free primary veneers (20) by patching a defect area on
   the primary veneers (20) with a corresponding piece of sound-quality secondary veneers;
c. assembling each of the primary veneers (20) lengthwise and/or widthwise using scarf jointing and gluing two or more primary veneers (20) together by an adhesive to form a plurality of the assembled veneers (30);
d. ripping each of the assembled veneers (30) lengthways to form a plurality of strips (40);
e. laminating the strips (30) by the adhesive under high-pressure compression to form a multilayer block (50);
f. multi-ripping the multilayer block (50) to form a plurality of teak planks (60) with desired thickness and width; and
g. kiln drying each of the teak planks (60) to have kiln drying each of the teak planks to have a moisture content between 8-20%, wherein the teak planks have a transverse coefficient of thermal expansion less than 50 × 10⁻⁶ /°C.

As used herein, the term "veneer" means a thin or fine sheet of wood produced by rotary cutting, peeling, or slicing.

As used herein, the term "peeling" refers to when the whole round log is mounted in a large lathe and turned against the blade which peels the veneers in long sheets. Also called rotary cut which produces a continuous wide sheet of veneer. The peeling method is the most economical method of cutting.

For all veneers that are not rotary cut, the logs are sawn into halves, thirds, or quarters or more. In the traditional manufacture of teak plank, the slicing methods e.g. plain slice, rift cut, or quarter cut are used to make the veneers.

In the present invention, the veneers obtained from the peeling method are different from those obtained from the slicing method. In rotary peeling, the method follows the tree's annual growth rings resulting in bold, irregular markings. Rotary cut veneers are wide so they are usually cut to size and defects, if any, are removed. It is a very cost-effective cutting method due to its yield. The slicing method is favored for the production of decorative timber veneers and cuts. The most common methods are quarter and crown. In order to produce quarter-cut veneer, the log must be cut into quarters before slicing. A quarter log is placed on a frame so that the knife meets the growth rings at a right angle. The result is veneers with stripes, which depending on the species may or may not be straight. This slicing technique requires trees of large diameter and yields are typically lower than peeling methods, meaning quarter-cut veneer can be more expensive.

A crown cut (also known as a flat cut or plain sliced) involves a half log being moved towards a knife in an up-and-down movement. The slices, referred to as leaves, are stored in sequential order as they are cut. This practice is important for matching veneers for project aesthetics. Crown cut is a widely used slicing method in veneer manufacturing and typically results in a straight grain interspersed with cathedral patterns, also known as crowns.

Other methods of producing veneer include half-round slicing and rift cut, where the log is sliced on a slight angle.

The peeling method of the present invention can be the automated, semi-automated, or manual peeling method.

Each of the primary veneers (20) may be in the same or different sizes depending on the size of the teakwood log. For example, the primary veneers may have a thickness (T) between 0.5-2.0 mm, a width (W) between 1.2-1.5 m, and a length (L) between 1.2-1.5 m.

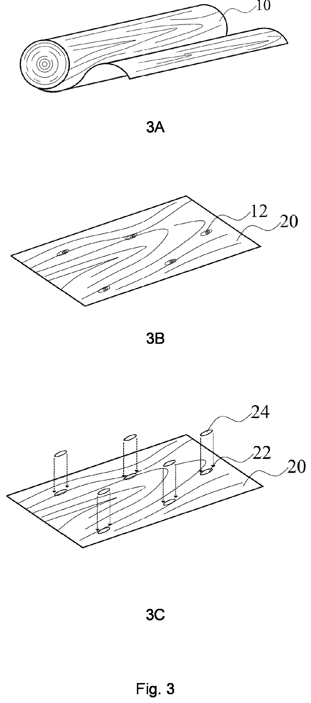

Figs. 3A, 3B, and 3C illustrate a teakwood log (60) for peeling into primary veneer (20), the primary veneer (20) having defects (12) and the primary veneer (20) patched with the corresponding pieces of the premium quality secondary veneers (24);
As used herein, the term "scarf joint" means a lapped joint between two pieces of veneers made by notching or grooving the ends and strapping, bolting, or gluing the two pieces together. The scarf joint is used when the material being joined is not available in the length required. Joints other than the scarf joint such as the butt joint and the splice joint may be used.

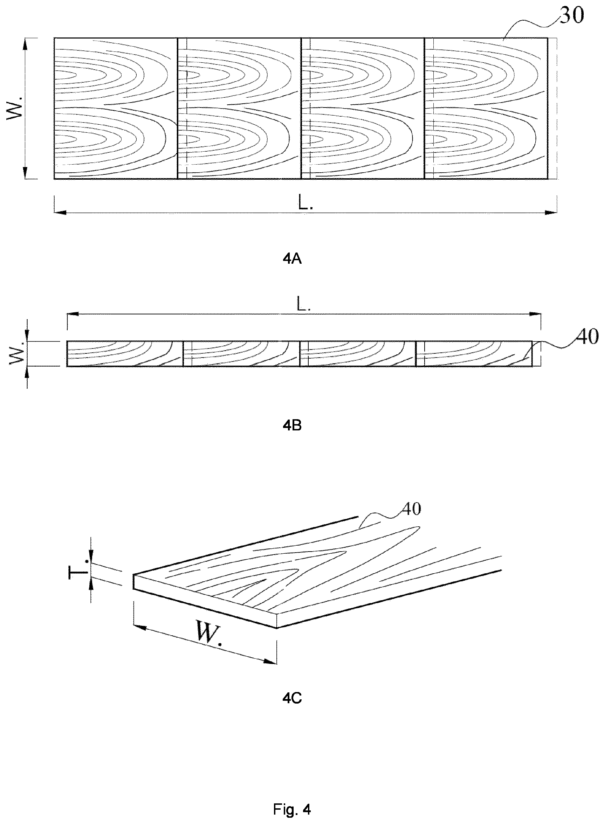

Figs. 4A, 4B, and 4C illustrate the top view of an assembled veneer (30) and, the top and perspective views of a strip (40), respectively ripped from the assembled veneer (30).

The assembled veneer (30) is wider and/or longer than the primary veneer (20) at least 1.5-fold e.g. 1.5, 2, 2.5, 3-fold, etc. However, the size of the assembled veneer varies based on the desired size of the teak plank (60). Each of the assembled veneers (30) may have a thickness between 0.5-2 mm, a width between 60-180 mm, and a length between 900-5000 mm.

To obtain the teak plank (60) with a consistent and even straight grain pattern, the method of making the teak plank (60) of the present invention may further comprise of calibrating each strip (40) to obtain the strips having the same thickness and evenness before laminating step. The strip (40) may have a thickness between 0.5-2.0 mm, the width between 75-155 mm. and the length between 900-5000 mm.

As used herein, the term "laminating" means to unite layers of material e.g. layers of wood by an adhesive or other means.

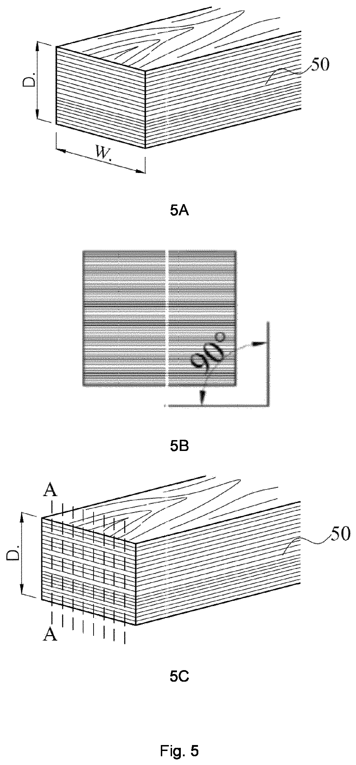

Figs. 5A, 5B, and 5C illustrate the perspective view of a multilayer block (50) made from laminating the strips (40), the front view of the multilayer block (50) showing one strip layer is substantially perpendicular to another strip layer, and perspective view of the multilayer block (50) with ripping marks (A-A), respectively.

According to Fig. 5C, the multilayer block (50) is ripped in the direction along the dotted line A-A perpendicular to the plane of the strip (40) with a saw or similar tool to form the teak plank. For example, the teak plank is 30mm thick, 150mm wide, and 4000mm long with a straight grain.

As used herein, the term "ripping" is used to describe cutting the assembled veneer or multilayer block lengthwise. Ripping can be accomplished using a table saw, saw machine, circular saw, frame saw, band saw, or even a handsaw.

In laminating the strips (40), the adhesive used therein is selected from a group consisting of polyvinyl Acetate (PVA), polyurethane, cyanoacrylate (CA), Ethylene-Vinyl Acetate (EVA), urea-formaldehyde, hide glue, epoxy, melamine-based glue and a combination thereof. The adhesive used may be commercially available or freshly prepared according to the method well known to a person having ordinary skill in the art. For example, MF-3L/M-610LY from Hexion (Thailand) Co., Ltd. may be used in the laminating step.

After sticking layers of the strips together by applying the adhesive as discussed above, the resulting wood laminate is introduced into the high-pressure compression for 2-5 hours under pressure between 10-20 kg/cm² to form the multilayer block (50). The adhesive used in the laminating step also may be a dyed adhesive.

The multilayer block (50) may have a thickness between 30-300 mm, a width between 80-120 mm, and a length between 900-5000 mm. The multilayer block (50) is then ripped passing lengthwise through the body of the multilayer block (50) to form a plurality of teak planks (60) with a consistent and even straight grain pattern. The teak plank may have a thickness between 3-120 mm a width between 30-300 mm and a length between 900-5000 mm.

As used herein, the term "kiln drying" is used to describe the standard process of efficiently bringing moisture levels in wood to a "workable" range. The kiln process involves the drying of wood in a chamber where air circulation, relative humidity, and temperature can be controlled so that the moisture content of wood can be reduced to a target point without having any drying defects. The used kilns in the present invention can be conventional and dehumidification kilns. Vacuum and solar kilns also can be used.

After the kiln drying step, the teak plank has according to the invention, a moisture content between 8-20%.

The method of making the teak plank of the present invention may further comprise conditioning each strip to obtain the strips with the desired moisture content before the laminating step.

As used herein, the term "conditioning" is used to describe the process of relieving tension while drying wood.

After the conditioning step, the strips have a moisture content between 8-20%.

In an alternate aspect of the present invention, the method of making the teak plank as discussed above may further comprise sun burning the teak planks for 24-48 hours to mature the color of the teak plank.

There are a variety of ways to finish teak plank and the decision rests on a combination of desired characteristics. Typically, there are two-step, three-step, and five-step finish processes to ensure the highest quality of the teak plank.

In an alternate aspect of the present invention, the method of making the teak plank as discussed above may further comprise finishing steps to provide the teak plank with scratch resistance, chemical resistance, moisture resistance, clarity, appearance, sheen, and reparability.

There have been a number of different ways teak decks have been finished. Starting with natural finishes such as beeswax or linseed oil, the teak plank industry's techniques have evolved to include a number of different catalyst, water-based, and urethane finish options. A catalyzed finish mixes a resin with a catalyst to create a reaction and this includes catalyzed lacquer, conversion varnish, urethanes, polyesters, and UV-cured processes. Water-based finishes and urethane or urethane/acrylic blends can be solvent-based or water-based.

Stain/toner includes semitransparent colors used to block out or reduce color variation. Wash coat includes seals in the base color of the stain, while still allowing the wiping glaze to seep into the pores without changing the background color. Wiping glaze is a pigmented oil applied to the teak plank that fills the pores to provide a subtle undertone that accents the grain. Seal is a protective layer of clear coating that locks in the colors and provides a smooth surface for the clear coat. A topcoat is a clear coat that provides protection and a finished appearance.

The finishing materials used in the finishing steps according to the present invention are selected from the group consisting of beeswax, linseed oil, catalyzed lacquer, conversion varnish, urethanes, polyesters, urethane/acrylic blends, stain/toner, wash coat, wiping glaze, seal, and topcoat. The plank could also be left untreated, depending on the requirement.

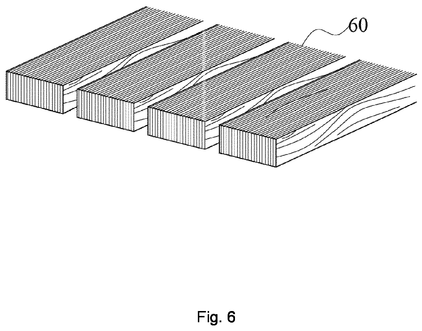

Fig. 6 illustrates the perspective view of teak planks obtained from the method of the present invention. The resulting teak plank has a higher density than natural teak (about 650-900 kg/m3) has a compressive strength close to or higher than natural teak and has transverse coefficients of thermal expansion (CTE) less than 50 x 10-6/degree Celsius. This makes it well resistant to humidity and heat. The teak plank of the present invention is thus suitable for decking, and making decorative items and furniture.

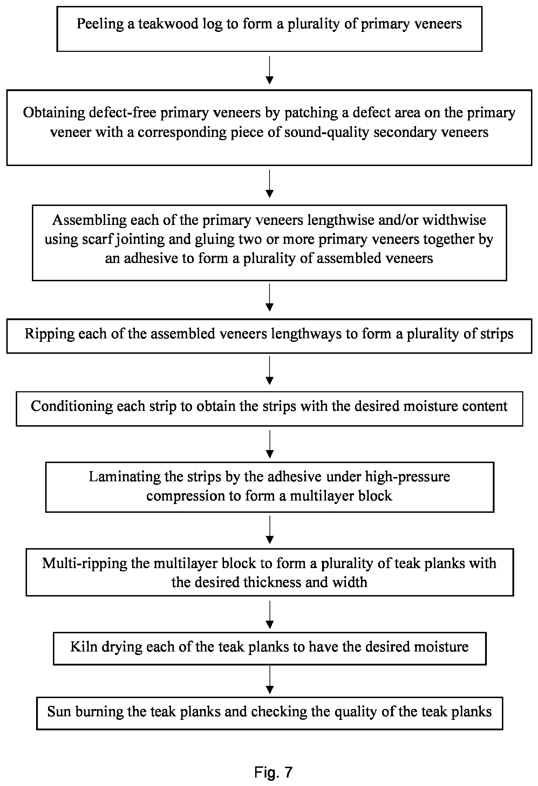

Fig. 7 illustrates the flow chart for the method of teak plank manufacture according to the specific embodiment of the present invention. The method comprises steps:
a. peeling a teakwood log to form a plurality of primary veneers (20);
b. obtaining a plurality of defect-free primary veneers (20) by patching a defect area on
   the primary veneer (20) with a corresponding piece of premium-quality secondary veneers;
c. assembling each of the primary veneers (20) lengthwise and/or widthwise using scarf jointing and gluing two or more primary veneers (20) together by an adhesive to form a plurality of the assembled veneers (30);
d. ripping each of the assembled veneers (30) lengthways to form a plurality of strips (40);
e. conditioning each strip (40) to obtain the strips (40) with desired moisture content;
f. laminating the strips (30) by the adhesive under high-pressure compression to form a multilayer block (50);
g. multi-ripping the multilayer block (50) to form a plurality of teak planks (60) with desired thickness and width; and
h. kiln drying each of the teak planks to have a moisture content between 8-20%, wherein the teak planks have a transverse coefficient of thermal expansion less than 50 × 10⁻⁶ /°C; and
i. sun burning the teak planks (60) and checking the quality of the teak planks (60).

The teak plank of the present invention has been tested to the JAS (Japanese Agricultural Standard) 1152 2007: Boiling water soak delamination test. It is standard testing for structural glued laminated timber. The test consists of cutting the specimen into 75 mm, weighing each specimen, soaking each specimen in boiling water for 4 hours then cooling it in water at 10-25 degrees Celsius for 1 hour, drying the specimen in an oven (with circulating air) at 70 ± 3 degrees Celsius until weight of the specimen is between 100 - 110% of the weight before soaking in boiling water. The test was performed in 2 cycles. Delamination must not exceed 3 mm in length and 0.05 mm in width. Also, the delamination ratio must be less than 5%. From the test result, no delamination of the teak deck of this invention was found.

In addition to the foregoing test, the dimensional stability, equilibrium moisture content (EMC), and density of the teak planks obtained from the traditional method and the method of the present invention were also tested. Results are shown in Tables 1-3. The test methods will be described hereinafter.

### • Dimensional stability

Determination of dimensional changes associated with changes in relative humidity was performed according to EN 318. This European Standard specifies a method for the determination of dimensional changes in wood-based panels, due to changes in the relative humidity of the air. The teak plank obtained from the traditional method (comparative sample) and the teak plank obtained from the method of the present invention (test sample) in the same size without finishing steps were used for dimensional change testing between 65%-85% relative humidity. The results of dimensional stability are shown in table 1.

**Table 1. The dimensional stability of the teak planks obtained from the traditional method and the method of the present invention**

| **Samples** | **Thickness change** | **Length change** |
|---|---|---|
| Comparative sample | 0.5% | 0.38% |
| Test sample | 0.9% | 0.42% |

The result in Table 1 shows that there are no significant changes in the thickness and length of both teak planks obtained from the traditional method and the present invention.

### • Equilibrium moisture content (EMC)

In this test, the static gravimetric method, which is based on the use of salt solution to maintain relative humidity was used. The mass transfers between the samples and ambient air are saturated by the natural diffusion of water vapor. The atmosphere surrounding the samples has a fixed air moisture content for the temperature applied to the salt solution. The samples were sealed up in small glass containers that contained 10% NaCl as the salt solution. The relative humidity of 65% and temperature of 70 °C were set for the test. Both comparative and test samples were tested for 4 cycles. Each cycle includes 3 days of drying the samples at 70 °C, 1 day of submerging the samples in 10% NaCl, 2 days of drying the samples at 70 °C, and 1 day of submerging the samples in 10% NaCl. The results of equilibrium moisture content (EMC) are shown in Table 2.

**Table 2. Equilibrium moisture content (EMC) of the teak planks obtained from the traditional method, and the method of the present invention**

| **Samples** | **Equilibrium Moisture content** |
|---|---|
| Comparative sample | 7.4 |
| Test sample | 7.3 |

This test measures the hygroscopicity of the samples which is the tendency for solid materials to absorb moisture from the surroundings. At 65% relative humidity, the teak plank obtained from the method of the present invention has shown near identical performance to the teak plank obtained from the traditional method.

### • Density

The process of measuring the density of the teak plank begins by embedding a steel ball that has a diameter of 11.28 millimeters (roughly 0.444 inches) halfway into the surface of the teak plank. The force required to push the ball into the teak plank indicates how dense and strong the teak plank is. Higher density indicates a greater strength.

**Table 3. The density of the teak planks obtained from the traditional method and the method of the present invention**

| **Samples** | Density (kg/m³) |
|---|---|
| Comparative sample | 631 |
| Test sample | 703 |

The result in Table 3 shows that the teak plank obtained from the method of the present invention has greater strength than the teak plank obtained from the traditional method.

In conclusion, the method of the present invention reduces manufacturing time when compared to other natural wood deck/plank "alternatives". The method also retains the aesthetics of natural teak compared to other previous arts. The method of the present invention can produce wider and longer lengths of teak plank from the shorter teak logs. The teak planks obtained from the method of the present invention also have the same or even higher quality compared with one obtained from the traditional method.

## Claims

1. A method of making a teak plank, comprising steps:
a. peeling a teakwood log to form a plurality of primary veneers;
**characterized in that** the method comprises the following:
b. obtaining defect-free primary veneers by patching a defect area on the primary veneer with a corresponding piece of premium-quality secondary veneers;
c. assembling each of the primary veneers lengthwise and/or widthwise using scarf jointing and gluing two or more primary veneers together by an adhesive to form a plurality of assembled veneers;
d. ripping each of the assembled veneers lengthways to form a plurality of strips;
e. laminating the strips by the adhesive under high-pressure compression to form a multilayer block;
f. multi-ripping the multilayer block to form a plurality of teak planks with desired thickness and width; and
g. kiln drying each of the teak planks to have a moisture content between 8-20%, wherein the teak planks have a transverse coefficient of thermal expansion less than 50 × 10⁻⁶/°C.

2. The method of making the teak plank of claim 1, wherein each of the primary veneers has a thickness between 0.5-2.0 mm, a width between 1,200-1,500 mm, and a length between 1,200-1,500 mm.

3. The method of making the teak plank of any one of claims 1-2, wherein the assembled veneers are wider and/or longer than the primary veneers at least 1.5 fold.

4. The method of making the teak plank of any one of claims 1-3, further comprising calibrating each strip to obtain the strips having the same thickness and evenness before the laminating step.

5. The method of making the teak plank of any one of claims 1-4, further comprising conditioning each strip to obtain the strips with desired moisture content before the laminating step.

6. The method of making the teak plank of any one of claims 1-5, wherein each strip has a thickness between 0.5-2.0 mm, a width between 75-155 mm, and a length between 900-5,000 mm.

7. The method of making the teak plank of any one of claims 1-6, wherein the adhesive is selected from a group consisting of polyvinyl Acetate (PVA), polyurethane, cyanoacrylate (CA), Ethylene-Vinyl Acetate (EVA), urea-formaldehyde, hide glue, epoxy, melamine-based glue and a combination thereof.

8. The method of making the teak plank of any one of claims 1-7, wherein the adhesive is dyed adhesive.

9. The method of making the teak plank of any one of claims 1-8, wherein the multilayer block has a thickness between 75-155 mm, a width between 150-300 mm, and a length between 900-5,000 mm.

10. The method of making the teak plank of any one of claims 1-9, wherein the teak plank has a thickness between 2-153 mm, a width between 30-300 mm, and a length between 900-5,000 mm.

11. The method of making the teak plank of any one of claims 1-10, further comprising sun burning the teak plank to mature the color of the teak plank.

12. The method of making the teak plank of any one of claims 1-11, further comprising finishing steps to provide the teak plank with scratch resistance, chemical resistance, moisture resistance, clarity, appearance, sheen, and reparability.

13. The method of making the teak plank of claim 12, wherein the finishing materials used in the finishing steps are selected from the group consisting of beeswax, linseed oil, catalyzed lacquer, conversion varnish, urethanes, polyesters, urethane/acrylic blends, stain/toner, wash coat, wiping glaze, seal, and topcoat.

## Patentansprüche

1. Verfahren zur Herstellung einer Teakholzplanke, umfassend die folgenden Schritte:
a. Schälen eines Teakholzstammes zur Bildung einer Vielzahl von Primärfurnieren; **dadurch gekennzeichnet, dass** das Verfahren Folgendes umfasst:
b. Herstellung von fehlerfreien Primärfurnieren durch Ausbessern einer fehlerhaften Stelle auf dem Primärfurnier mit einem entsprechenden Stück hochwertiger Sekundärfurniere;
c. Zusammenfügen jedes der Primärfurniere in Längsrichtung und/oder in der Breite unter Verwendung von Schälfugen und Zusammenkleben von zwei oder mehr Primärfurnieren mit einem Klebstoff, um eine Vielzahl von zusammengesetzten Furnieren zu bilden;
d. Zerreißen jedes der zusammengesetzten Furniere in Längsrichtung, um eine Vielzahl von Streifen zu bilden;
e. Laminieren der Streifen durch den Klebstoff unter Hochdruckkompression zur Bildung eines mehrschichtigen Blocks;
f. Mehrfach-Rippen des mehrschichtigen Blocks, um eine Vielzahl von Teakholzplanken mit der gewünschten Dicke und Breite zu bilden; und
g. Trocknen jeder der Teakholzplanken in einem Trockenofen, um einen Feuchtigkeitsgehalt zwischen 8-20% zu erreichen, wobei die Teakholzplanken einen Wärmeausdehnungskoeffizienten in Querrichtung von weniger als 50 × 10⁻⁶/°C aufweisen.

2. Verfahren zur Herstellung der Teakholzplanke nach Anspruch 1, wobei jedes der Primärfurniere eine Dicke zwischen 0,5-2,0 mm, eine Breite zwischen 1.200-1.500 mm und eine Länge zwischen 1.200-1.500 mm aufweist.

3. Verfahren zur Herstellung der Teakholzplanke nach einem der Ansprüche 1-2, wobei die zusammengesetzten Furniere mindestens 1,5-mal breiter und/oder länger sind als die Primärfurniere.

4. Verfahren zur Herstellung der Teakholzplanke nach einem der Ansprüche 1-3, umfassend ferner das Kalibrieren jedes Streifens, um vor dem Laminierschritt zu erreichen, dass die Streifen die gleiche Dicke und Ebenheit aufweisen.

5. Verfahren zur Herstellung der Teakholzplanke nach einem der Ansprüche 1-4, umfassend ferner die Konditionierung jedes Streifens, um die Streifen mit dem gewünschten Feuchtigkeitsgehalt vor dem Laminierschritt zu erhalten.

6. Verfahren zur Herstellung der Teakholzplanke nach einem der Ansprüche 1-5, wobei jeder Streifen eine Dicke zwischen 0,5-2,0 mm, eine Breite zwischen 75-155 mm und eine Länge zwischen 900-5.000 mm aufweist.

7. Verfahren zur Herstellung der Teakholzplanke nach einem der Ansprüche 1-6, wobei der Klebstoff aus einer Gruppe ausgewählt wird, die aus Polyvinylacetat (PVA), Polyurethan, Cyanacrylat (CA), Ethylen-Vinylacetat (EVA), Harnstoff-Formaldehyd, Hautleim, Epoxid, Leim auf Melaminbasis und einer Kombination davon besteht.

8. Verfahren zur Herstellung der Teakholzplanke nach einem der Ansprüche 1-7, wobei der Klebstoff ein gefärbter Klebstoff ist.

9. Verfahren zur Herstellung der Teakholzplanke nach einem der Ansprüche 1-8, wobei der mehrschichtige Block eine Dicke zwischen 75-155 mm, eine Breite zwischen 150-300 mm und eine Länge zwischen 900-5.000 mm aufweist.

10. Verfahren zur Herstellung der Teakholzplanke nach einem der Ansprüche 1-9, wobei die Teakholzplanke eine Dicke von 2-153 mm, eine Breite von 30-300 mm und eine Länge von 900-5.000 mm aufweist.

11. Verfahren zur Herstellung der Teakholzplanke nach einem der Ansprüche 1-10, umfassend ferner das Sonnenbrennen der Teakholzplanke, um die Farbe der Teakholzplanke zu reifen.

12. Verfahren zur Herstellung der Teakholzplanke nach einem der Ansprüche 1-11, umfassend ferner Endbearbeitungsschritte, um der Teakholzplanke Kratzfestigkeit, Chemikalienbeständigkeit, Feuchtigkeitsbeständigkeit, Klarheit, Aussehen, Glanz und Reparaturfähigkeit zu verleihen.

13. Verfahren zur Herstellung der Teakholzplanke nach Anspruch 12, wobei die in den Endbearbeitungsschritten verwendeten Endbearbeitungsmaterialien aus der Gruppe ausgewählt sind, die aus Bienenwachs, Leinöl, katalysiertem Lack, Konversionslack, Urethanen, Polyestern, Urethan/Acryl-Mischungen, Beize/Toner, Washcoat, Wischlasur, Versiegelung und Topcoat besteht.

## Revendications

1. Une méthode de fabrication d'une planche de teck, comprenant les étapes suivantes :
a. dérouler une bille de bois de teck pour former une pluralité de placages primaires ; **caractérisé en ce que** la méthode comprend les étapes suivantes :
b. obtenir des placages primaires sans défaut en réparant une zone défectueuse du placage primaire à l'aide d'un morceau correspondant de placage secondaire de qualité supérieure ;
c. assembler chacun des placages primaires dans le sens de la longueur et/ou de la largeur à l'aide d'un joint en biseau et coller deux ou plusieurs placages primaires ensemble à l'aide d'un adhésif afin de former une pluralité de placages assemblés ;
d. refendre chacun des placages assemblés dans le sens de la longueur pour former une pluralité de bandes ;
e. laminer les bandes à l'aide de l'adhésif sous compression à haute pression afin de former un bloc multicouche ;
f. multi-refendre le bloc multicouche pour former une pluralité de planches de teck ayant l'épaisseur et la largeur souhaitées ; et
g. sécher au four chacune des planches de teck afin d'obtenir une teneur en humidité comprise entre 8-20 %, les planches de teck ayant un coefficient de dilatation thermique transversal inférieur à 50 × 10⁻⁶/°C.

2. La méthode de fabrication de la planche de teck selon la revendication 1, dans laquelle chacun des placages primaires a une épaisseur comprise entre 0,5-2,0 mm, une largeur comprise entre 1.200-1.500 mm, et une longueur comprise entre 1.200-1.500 mm.

3. La méthode de fabrication de la planche de teck selon l'une quelconque des revendications 1-2, dans laquelle les placages assemblés sont au moins 1,5 fois plus larges et/ou plus longs que les placages primaires.

4. La méthode de fabrication de la planche de teck selon l'une quelconque des revendications 1-3, comprenant en outre le calibrage de chaque bande afin d'obtenir des bandes ayant la même épaisseur et la même régularité avant l'étape de laminage.

5. La méthode de fabrication de la planche de teck selon l'une quelconque des revendications 1-4, comprenant en outre le conditionnement de chaque bande afin d'obtenir des bandes présentant la teneur en humidité souhaitée avant l'étape de laminage.

6. La méthode de fabrication de la planche de teck selon l'une quelconque des revendications 1-5, dans laquelle chaque bande a une épaisseur comprise entre 0,5-2,0 mm, une largeur comprise entre 75-155 mm et une longueur comprise entre 900-5.000 mm.

7. La méthode de fabrication de la planche de teck selon l'une quelconque des revendications 1-6, dans laquelle l'adhésif est choisi parmi un groupe constitué de polyacétate de vinyle (PVA), de polyuréthane, de cyanoacrylate (CA), d'éthylène-acétate de vinyle (EVA), d'urée-formaldéhyde, de colle de peau, d'époxy, de colle à base de mélamine et d'une combinaison de ceux-ci.

8. La méthode de fabrication de la planche de teck selon l'une quelconque des revendications 1-7, dans laquelle l'adhésif est un adhésif teinté.

9. La méthode de fabrication de la planche de teck selon l'une quelconque des revendications 1-8, dans laquelle le bloc multicouche a une épaisseur comprise entre 75-155 mm, une largeur comprise entre 150-300 mm et une longueur comprise entre 900-5.000 mm.

10. La méthode de fabrication de la planche de teck selon l'une quelconque des revendications 1-9, dans laquelle la planche de teck a une épaisseur comprise entre 2-153 mm, une largeur comprise entre 30-300 mm et une longueur comprise entre 900-5.000 mm.

11. La méthode de fabrication de la planche de teck selon l'une quelconque des revendications 1-10, comprenant en outre le brûlage au soleil de la planche de teck afin de faire mûrir la couleur de la planche de teck.

12. La méthode de fabrication de la planche de teck selon l'une quelconque des revendications 1-11, comprenant en outre des étapes de finition pour conférer à la planche de teck une résistance aux rayures, une résistance aux produits chimiques, une résistance à l'humidité, une clarté, un aspect, un éclat et une réparabilité.

13. La méthode de fabrication de la planche de teck selon la revendication 12, dans laquelle les matériaux de finition utilisés dans les étapes de finition sont choisis parmi le groupe constitué de cire d'abeille, d'huile de lin, de laque catalysée, de vernis de conversion, d'uréthanes, de polyesters, de mélanges uréthane/acrylique, de teinture/toner, de couche d'impression, de glacis d'essuyage, de scellant et de couche de finition.
